# EUROPEAN PATENT SPECIFICATION

(11) **EP 1 292 180 B1**
(45) Date of publication and mention of the grant of the patent: **15.09.2004**
(21) Application number: 01949882.3
(22) Date of filing: 20.06.2001
(51) Int. Cl.: A01F 25/20

(54) **A FEED-MIXING TRUCK**
WAGEN ZUM MISCHEN VON FUTTER
CHARIOT MELANGEUR D'ALIMENTS

(30) Priority: 22.06.2000 IT PD20000169; 17.11.2000 EP 00124361
(43) Date of publication of application: 19.03.2003
(73) Proprietor: Unifast S.r.l., 35023 Bagnoli di Sopra (Padova) (IT)
(72) Inventor: FACCIA, Fausto, I-35021 Agna (IT)
(74) Representative: Fabris, Stefano (IT)
(86) International application number: PCT/IT2001/000325
(87) International publication number: WO 2001/097595

(56) References cited:
- EP-A- 0 047 446
- EP-A- 0 106 713
- EP-A- 0 943 232
- EP-A- 1 080 634
- DE-A- 19 829 905
- DE-C- 3 920 053
- FR-A- 2 172 938
- FR-A- 2 596 945

## Description

The subject of the present invention is a feed-mixing truck according to the preamble to the main claim. Mixing trucks of this type are known from the Applicant's current production.

### Background art

Known mixing trucks, particularly those having hoppers with vertical axes, are produced both in trailer form and in self-propelled form. In self-propelled form, a truck of this type frequently has a continuously-operating feed-loading device which typically comprises a silage cutter mounted on the free end of a tubular duct the opposite end of which is articulated to the chassis in order to open into the hopper. Inside the duct is a conveyor device which continuously transports the material chopped by the silage cutter to the hopper. A main disadvantage of mixing trucks having this structure is that they require considerable installed power since the cutter, the loading device, and the screw mixer device which is mounted inside the hopper have high intrinsic power requirements. In fact, all of these members have to be activated simultaneously during the loading of the hopper since, otherwise, the material brought to the hopper by the loading device would tend to accumulate, blocking the normal operation of the screw mixer and of the loader.

A second disadvantage is that these mixing trucks have been found not to be very versatile and their field of use is therefore limited purely to agricultural businesses which are of a certain size and in which the feed is stored only in certain ways.
A further disadvantage of mixing trucks of this type is caused by the considerable amount of space occupied by the cutter and by the tubular duct associated therewith. The cutter and the duct have to be lowered during transportation, limiting the driver's view to the front and to the side of the driving cab of the mixing truck and also causing the truck to have a considerable length.
Mixing trucks comprising a discontinuously-operating loading device is known from DE 3920053 and EP 106713.
The discontinuously-operating loading device disclosed by these documents, comprises a receptacle disposed pivotably at a free end of a loading arm articulated on the chassis.

### Disclosure of the invention

The problem upon which the present invention is based is that of providing a feed-mixing truck which is designed structurally to overcome all of the disadvantages discussed with reference to the prior art mentioned. Within the scope of this problem, the main aim of the invention is to provide a mixing truck to which various loading members can be coupled with relative operative ease.
A further aim of the invention is to reduce the installed power required for correct operation of the mixing truck and, at the same time, to reduce the space occupied thereby.
This problem is solved and these aims are achieved by a feed-mixing truck formed in accordance with the appended claims.

### Brief description of the drawings

The characteristics and the advantages of the invention will become clearer from the detailed description of three preferred embodiments thereof, described by way of nonlimiting example, with reference to the appended drawings, in which:
- Figure 1 is a schematic side elevational view of a feed-mixing truck formed in accordance with the invention,
- Figure 2 is a schematic side elevational view of a variant of a detail of the truck of Figure 1,
- Figure 3 is a schematic, partial side elevational view of a second embodiment of the mixing truck according to the invention,
- Figure 4 is a schematic, partially-exploded side elevational view of a third embodiment of the mixing truck according to the invention, and
- Figures 5 and 6 are plan views of a first detail and of a second detail of the truck of Figure 4, respectively.

### Best modes for carrying out the invention

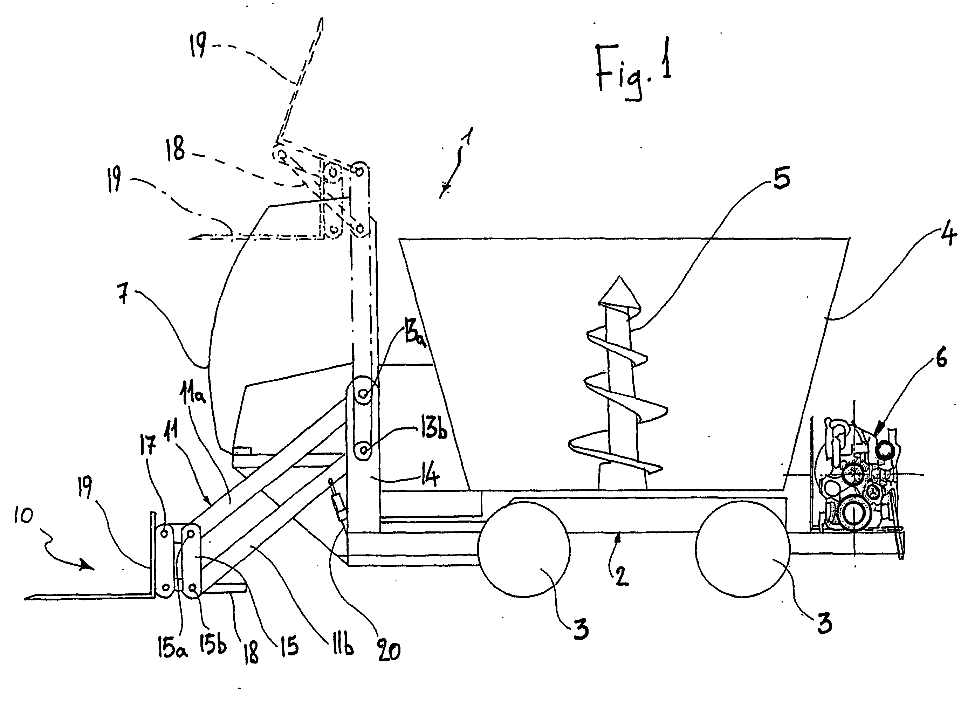

In Figure 1, a self-propelled feed-mixing truck according to the invention is generally indicated 1.

The truck 1 comprises a chassis 2 provided with wheels 3 or other locomotion means (for example, tracks), a feed-mixing hopper 4 mounted centrally on the chassis 2 and in turn provided, in a central position, with a screw mixer 5 of conventional structure and with a vertical axis, an engine 6 mounted transversely on the chassis 2 in the rear portion thereof, behind the hopper 4, and a cab 7 for the driver, mounted on the front of the chassis 2 in a position offset laterally relative to the direction of travel.

The truck 1 also comprises a loading device, generally indicated 10, with discrete, that is discontinuous, operation.

The loading device 10 may adopt various configurations, some of which are known in the field of mechanical loading shovels or the like, and comprises an articulated-parallelogram loading arm 11 with two connecting rods 11a, 11b, each having one end connected, by means of a respective pin 13a, 13b to an upright support 14 mounted on the chassis 2. The connecting rods have their opposite ends connected pivotably to a link 15 by means of pins 15a, 15b.

A receptacle 19 such as a loading shovel or fork is articulated pivotably to the link 15 by means of a pin 17, with pivoting brought about by a jack 18. Similarly, the receptacle may be of the bucket or guillotine-shovel type, the structure of which is known *per se.*

The receptacle 19 is pivotable between a first operative position in which it is substantially horizontal (shown in solid outline in Figure 1) and a second operative position in which it is raised, by pivoting of the arm 11 about the pins 13a, 13b by means of a jack 20, and is turned over at least partially above the hopper by means of the jack 18 to the position shown in broken outline in Figure 1. It is also possible to raise the receptacle to a raised, transportation position shown in chain line in Figure 1.

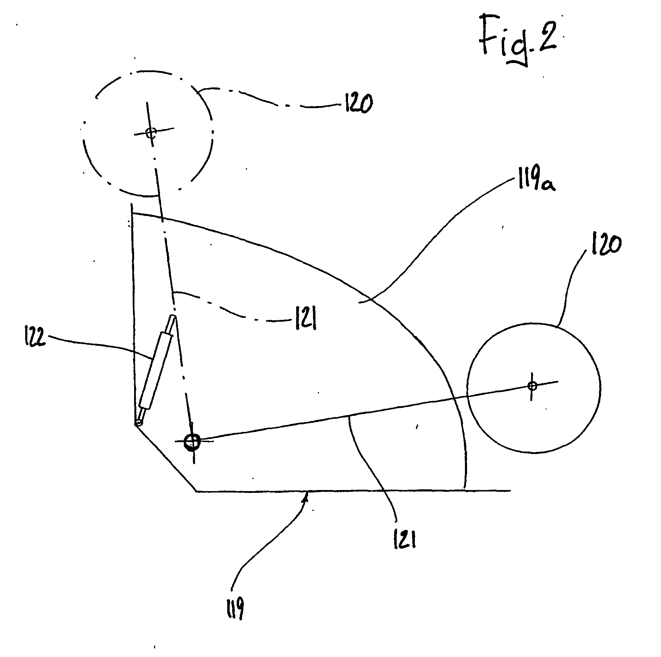

Upon the assumption that the loader is of the type with a shovel 119, with side walls 119a, it may be provided with a silage cutter 120 as well as a guillotine (Figure 2). The cutter 120 is driven by its own hydraulic motor in conventional manner and is mounted on the shovel so as to be pivotable by means of a pivoting-arm support 121 operated by a hydraulic jack 122. The cutter 120 can thus pivot between a rest position indicated in broken outline in Figure 2 and a working position indicated in continuous outline.

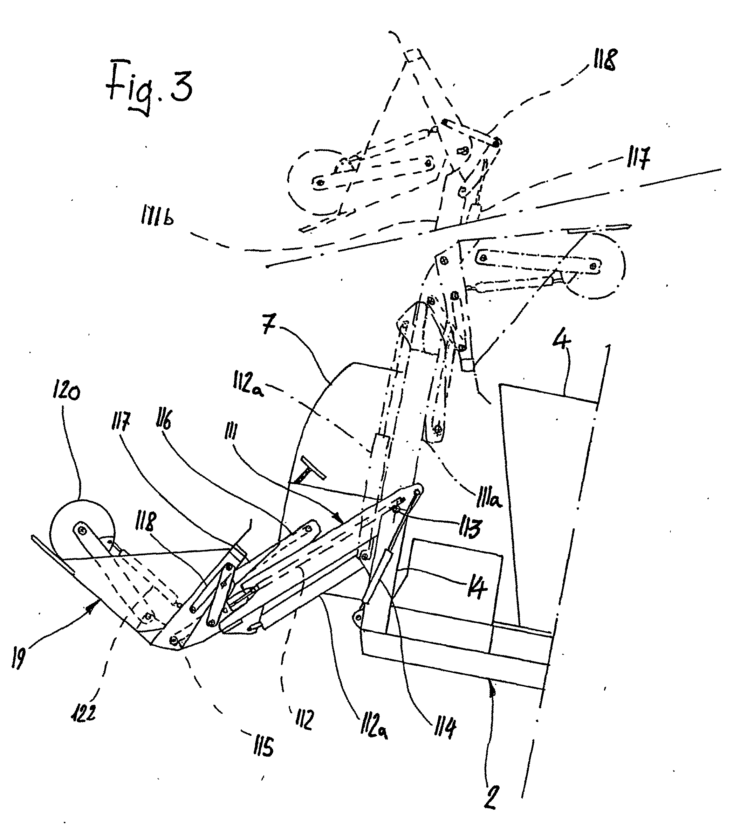

Figure 3 shows a second embodiment of the invention which differs from the embodiment of Figure 1 in the configuration of the loading arm 111. Similar details are indicated by the same reference numerals as in the previous embodiment.

The arm 111 is telescopic with a main tubular body 111a from which one (or more) extension 111b, operated by a first jack 112, can be extended.

The arm can pivot, by means of a second jack 112a, about a pin 113 at the free end of the upright support 14 mounted on the chassis 2, and is also connected to the chassis by means of a fluid-operated cylinder 114 of a levelling circuit of known type for the receptacle 19, for causing it to maintain a predetermined orientation relative to a reference plane (the ground) during the pivoting of the arm 111 about the pin 113.

The end of the extension 111b remote from the body 111a is articulated to the receptacle 19 by means of a pin 115 and carries a support 116 for a third jack 117, the rod of which is connected to a toggle linkage 118 acting between the extension 111b and the receptacle 19 to pivot the receptacle about the pin 115.

The mixing truck of the invention operates as follows. Irrespective of the type of receptacle mounted on the loading arm, during the movement of the truck as a whole, the arm is kept raised in the position shown in chain line in Figure 1, or in another position of minimal inconvenience, for example, in the position in which it is turned over above the hopper (shown in chain line in Figure 3). The compactness of the truck, by virtue of the transverse arrangement of the engine behind the load hopper and the ample visibility ensured by the position of the loading device during the movement of the truck, will be appreciated. When the feed to be loaded into the hopper is heaped on the ground, it can be loaded by bringing the loading device to the first operative position of Figures 1 and 3 (shown in continuous outline).

When the receptacle 19, 119 has been filled, regardless of whether it is of the shovel or fork type, the jack 20, 112a, is operated, raising the arm 11, 111 to the vertical position shown in chain line in Figures 1 and 3.

The receptacle 19, 119 is then turned over by the operation of the jack 18, 117, discharging the feed into the hopper 4.

In this case, if it is necessary to work with silage, it will be collected into a heap beforehand by conventional silage cutters or equivalent devices of known type.

Alternatively, the loading shovel provided with a silage cutter, shown in Figure 2, may be used. The shovel is brought up to the silage face, the cutter being kept in the working position and being rotated by means of its own hydraulic motor so as to chop the desired quantity of silage which is collected directly in the loading shovel or falls to the ground. The silage is then loaded into the hopper in the manner described above.

As a further alternative, the shovel, bucket, or fork receptacle or the like is replaced by a thrust device with a blade (of the bulldozer type) or of the type with brushes or fixed or rotating brooms, both of which are known p*er se* and are therefore not shown. These devices can be used to move feed which, for example, has been unloaded in the centre of a supply and distribution gangway in a shed, towards feeding troughs flanking the supply gangway laterally. This favours greater versatility of the mixing truck which, since it can thus be equipped, becomes suitable for performing all of the shed feeding functions, avoiding the use of other machines, such as tractors and the like which normally have other uses outside the shed and may therefore introduce dirt, mud, bacteria, germs, fungi and other undesired pathogenic agents, collected from the exterior.

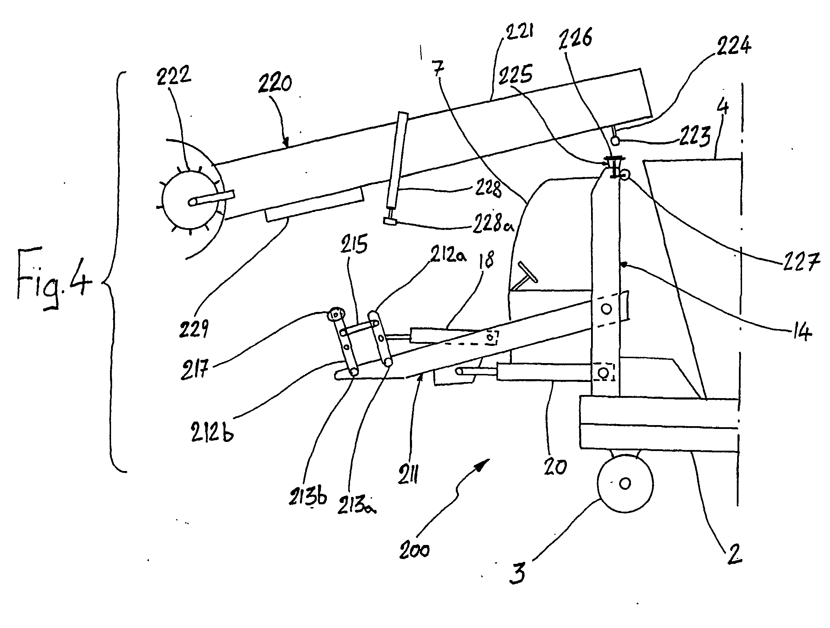

With reference to Figures 4 to 6, these show a third preferred embodiment of the mixing truck according to the invention, generally indicted 200.

Details of the truck 200 which are similar to details already described in the previous embodiments are indicated by the same reference numerals.

The truck 200 differs from the trucks described above, in the first place, by a different structure of the loading arm, which is indicated 211 in this embodiment. The arm 211 is articulated at a first of its ends to the upright support 14 mounted on the chassis 2, and is pivoted about this end by a jack 20.

Pairs of links 212a, 212b are articulated to the arm 211 at its opposite, free end by means of pins 213a, 213b. Each pair of links, 212a, 212b comprises two links articulated on the respective pin 213a, 213b, extending from the sides of the arm 211 and connected by respective crossmembers 214a, 214b, between which a connecting rod 215 extends opposite and parallel to the arm 211 (see Figure 5).

A double articulated-parallelogram structure is thus defined. The entire structure can be deformed by the action of a jack 18 extending between the arm 211 and a crossmember 214a of the pair of links 212a closest to the chassis 2.

Respective appendages 216 extend, substantially parallel to the pin 213b, from the free ends of the pair of links 212b remote from the pin 213b and an idle roller 217 is mounted on each appendage 216.

The appendages 216 can be translated axially away from one another by means of a jack 218 so as to project symmetrically from the articulated parallelogram structure to an extent which is adjustable as desired.

The loading arm 211 can be coupled to a continuously operating cutting loader 220, as well as to the various types of loading members mentioned with reference to the previous embodiments and generally identified by the receptacle 19.

The loader 220 comprises a tubular duct 221 on a first end of which a cutter 222 is supported rotatably for supplying the duct 221 continuously. Engagement means are arranged at the opposite end of the duct 221 for coupling with corresponding complementary engagement means provided on the top of the support 14 so that the duct 221 can pivot thereon.

The support 14 advantageously extends upwards as far as the vicinity of the mouth of the hopper 4 so that, once the duct 221 has been engaged on the support 14, it opens above the mouth of the hopper.

The engagement means comprise a pin 223 extending transversely relative to the longitudinal axis of the duct 221 and connected firmly thereto by a plate 224.

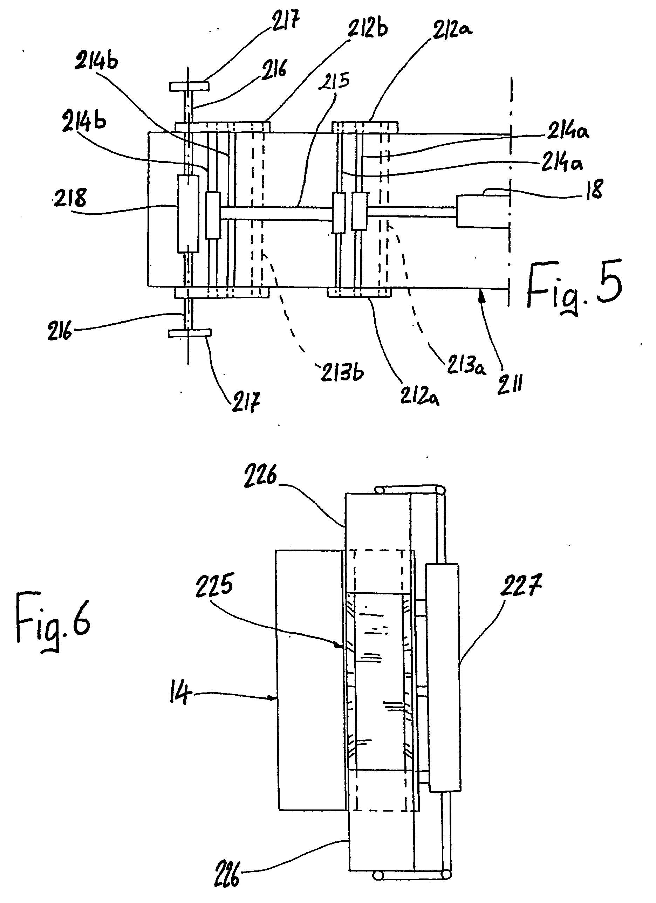

The complementary engagement means in turn comprise an upwardly-open cradle 225 for housing the pin 223 and plates 226 movable so as to close or open the cradle 225 in order to restrain or, alternatively, to release the pin 223 (see Figure 6). The plates 226 are preferably restrained slidably in guides formed in the mouth of the cradle 225 and are moved away from or towards one another by a jack 227.

A pair of jacks 228, fixed to the opposite sides of the duct 221, respectively, extend from an intermediate portion of the duct 221, transversely relative to the longitudinal axis thereof. The jacks 228 are arranged angularly in a manner such as to be substantially perpendicular to the ground when the duct 221 is pivoted fully downwards. Support feet 228a are provided on the respective ends of the jacks 228 closest to the ground.

A pair of channel-sectioned lateral guides 229 are also fixed, facing one another, to the sides of the duct 221, for slidable engagement by the idle rollers 217 of the arm 211.

The coupling between the arm 211 and the duct 221 may also be formed by a single guide arranged longitudinally along the central axis of the duct 221 and engageable by one or more rollers mounted on the articulated parallelogram structure of the arm 211.

When the cutting loader 220 is engaged on the truck 200, the pin 223 is restrained in the cradle 225 by the plates 226 and the duct 221 can pivot about the pin 223 owing to the lifting or lowering action of the arm 211 exerted by means of the rollers 217 engaged for sliding in the guides 229 of the duct 221.

In order to disconnect the cutting loader 220 from the truck 200, the cutter 222 is placed bearing on the ground, after which the plates 226 are translated apart so that the cradle 225 remains open upwardly. The jacks 228 are then operated, and lift the duct 221 slightly, once the feet 228a are bearing on the ground. Since the duct 221 is no longer restrained on the support 14 by the plates 226 it is pivoted about the cutter 222 and the pin 223 is lifted and removed from the cradle 225. After any connections for driving hydraulic motors (for example, for the operation of the cutter 222 or for the conveyor mechanism inside the duct 221) have been disconnected, the idle rollers 217 are removed from the guides 229 by a coordinated movement of the truck 200 and of the arm 211.

The mixing truck 200 is thus separated from the cutting loader 220 and the loading arm 211 can be used for operating with other loading members such as, a bucket or fork shovel which are engaged by the engagement of the appendages 216 in suitable seats or recesses provided in the loading members.

It will be noted that, by virtue of the fact that the appendages 216 can be adjusted, loading members of different sizes can be engaged, increasing the versatility of use of the truck 200.

Naturally, the coupling operation takes place by performing the procedure just described in reverse. It will be noted that, in the disconnected condition, the cutting loader 220 remains firmly supported on the cutter 222 and on the jacks 228, ready for subsequent engagement by the truck 200.

The cradle 225 disposed on the top of the support 14 advantageously has a relatively large opening and has dimensions considerably larger than the pin 223 so as to facilitate the insertion of the pin in the cradle 225. Once the pin 223 is housed in the cradle 225, the plates 226 are moved by the jack 227 to the position in which the cradle is closed. It will be noted that, should the pin 223 not be lowered into the cradle 225 in a central position, the plate 224 would be encountered by the plates 226 in their closure movement and moved to the correct position thereby. The plates 226 thus also act as means for locating the pin 223 in the cradle 225.

It will be noted that the mixing truck 200 is designed and constructed in a manner such that both of the operations to engage and to release the cutting loader 220 can be performed easily even by a single operator.

The invention thus achieves its aim and affords many advantages over conventional mixing trucks, amongst which is considerable longitudinal compactness, and perfect visibility from the driver's cab both during transportation and during loading of the hopper.

Moreover, the loading device is less bulky both during transportation and during the loading of the hopper and does not obstruct the driver's view.

Not least, the hopper can be loaded without the need to operate the mixing screw for this purpose. This permits a substantial reduction in the power required for the operation of the mixing truck.

As a result of these advantages, the mixing truck is shorter, more compact, and less heavy, and has lower production and running costs than commercially-available self-propelled models.

A further important advantage achieved by the invention is its versatility which permits easy changing of the loading member used and also facilitates changing from discontinuous to continuous loading. This enables a single machine to satisfy the requirements of agricultural businesses of different sizes and in which the feed is stored in different ways.

## Claims

1. A feed-mixing truck comprising a chassis (2) on which a feed-mixing hopper (4) and means for loading the feed into the mixing hopper (4) are mounted, the loading means comprising a discontinuously-operating loading device (10) with a receptacle (19, 119) which is disposed at the free end of a loading arm (11, 111, 211) and is pivotable relative to the arm (11, 111, 211) between a first operative position in which the receptacle is substantially horizontal in order to be filled and a second operative position in which the receptacle is at least partially turned over above the hopper (4), **characterized in that** the receptacle (19) is removable and the arm (211) and the chassis (2) are arranged so that they can be coupled to a loading device (220) of the continuously-operating type, and that the chassis comprises rapid engagement means for restraining the continuous-operating loading device on the chassis with an articulated coupling.

2. A mixing truck according to Claim 1, in which the continuous loading device (220) comprises rapid engagement means which can engage the corresponding engagement means provided on the chassis (2).

3. A mixing truck according to Claim 2, in which the engagement means on the chassis comprise a cradle (225) which can be closed selectively in order to restrain a pin (223) of the engagement means in the cradle (225) and locating means (226) are provided for locating the pin (223) when it is housed in the cradle (225).

4. A mixing truck according to any one of Claims 1 to 3, in which the receptacle (19) is replaceable with receptacles of different type and rapid engagement means are arranged on the arm to engage said receptacles.

5. A mixing truck according to Claim 4 in which the rapid engagement means are adjustable so as to engage receptacles of different type.

6. A mixing truck according to any of the preceding Claims, in which the receptacle (19, 119) is a loading shovel.

7. A mixing truck according to any one of the preceding Claims, in which a silage cutter (120) is provided, associated with the receptacle (119).

8. A mixing truck according to Claim 6 in which the loading shovel (19) is of the guillotine type, or of the fork type, or of the bucket type.

9. A mixing truck according to one or more of the preceding claims in which the receptacle (19) can be replaced removably by a thrust device.

10. A mixing truck according to Claim 10 in which the thrust device is of the type with a blade or with fixed or rotating brushes.

11. A mixing truck according to one or more of the preceding claims of the self-propelled type, with an engine (6) mounted transversely on the chassis (2) on the opposite side of the hopper (4) to the feed-loading means.

## Patentansprüche

1. Futtermischwagen, enthaltend ein Fahrgestell (2), auf dem ein Futtermischrumpf (4) und eine Einrichtung zum Laden des Futters in den Mischrumpf (4) montiert sind, welche Ladeeinrichtung eine diskontinuierlich arbeitende Ladeeinrichtung (10) mit einem Behälter (19, 119) umfasst, der am freien Ende eines Ladearmes (11, 111, 211) angeordnet ist und relativ zu dem Arm (11, 111, 21) zwischen einer ersten Arbeitsposition, in der der Behälter im wesentlichen horizontal ist, sodass er befüllt werden kann, und einer zweiten Arbeitsposition schwenkbar ist, in der der Behälter mindestens teilweise über dem Rumpf (4) umgedreht ist, **dadurch gekennzeichnet, dass** der Behälter (19) abnehmbar ist und der Arm (211) und das Fahrgestell (2) so angeordnet sind, dass sie an eine Ladeeinrichtung (220) einer kontinuierlich arbeitenden Bauart gekoppelt werden können, und dass das Fahrgestell eine Schnelleingriffseinrichtung zum Befestigen der kontinuierlich arbeitenden Ladeeinrichtung an dem Fahrgestell mit einer Gelenkkupplung enthält.

2. Mischwagen nach Anspruch 1, bei welchem die kontinuierliche Ladeeinrichtung (220) eine Schnelleingriffseinrichtung enthält, die in die entsprechende, am Fahrgestell (2) vorgesehene Eingriffseinrichtung eingreifen kann.

3. Mischwagen nach Anspruch 2, bei welchem die Eingriffseinrichtung an dem Fahrgestell eine Wiege (225) enthält, die selektiv geschlossen werden kann, um einen Bolzen (223) der Eingriffseinrichtung in der Wiege (225) festzuhalten, und eine Ausrichteinrichtung (226) vorgesehen ist, um den Bolzen (223) auszurichten, wenn er in die Wiege (225) eingesetzt ist.

4. Mischwagen nach einem der Ansprüche 1 bis 3, bei welchem der Behälter (19) gegen Behälter verschiedener Bauart austauschbar ist und an dem Arm eine Schnelleingriffseinrichtung für den Eingriff der Behälter vorgesehen ist.

5. Mischwagen nach Anspruch 4, bei welchem die Schnelleingriffseinrichtung einstellbar ist, um so den Eingriff von Behältern verschiedener Bauart zu ermöglichen.

6. Mischwagen nach einem der vorstehenden Ansprüche, bei welchem der Behälter (19, 119) eine Ladeschaufel ist.

7. Mischwagen nach einem der vorstehenden Ansprüche, bei welchem dem Behälter (119) zugehörig ein Silageschneider (120) vorgesehen ist.

8. Mischwagen nach Anspruch 6, bei welchem die Ladeschaufel (19) der Guillotinen-Bauart, der Gabel-Bauart oder der Eimer-Bauart entspricht.

9. Mischwagen nach einem oder mehreren der vorstehenden Ansprüche, bei welchem der Behälter (19) durch eine Schubeinrichtung abnehmbar ersetzt werden kann.

10. Mischwagen nach Anspruch 9, bei welchem die Schubeinrichtung der Bauart mit einem Messer oder mit feststehenden oder umlaufenden Bürsten entspricht.

11. Mischwagen nach einem oder mehreren der vorstehenden Ansprüche der selbstfahrenden Bauart, wobei ein Motor (6) an der Seite des Rumpfes (4) entgegengesetzt zu der Zulieferladeeinrichtung quer auf dem Fahrgestell (2) montiert ist.

## Revendications

1. Chariot de mélange d'une composition d'alimentation, comprenant un châssis (2) sur lequel sont montés une trémie (4) de mélange de composition d'alimentation et un dispositif de chargement de la composition d'alimentation dans la trémie (4) de mélange, le dispositif de chargement comprenant un appareil (10) de chargement à fonctionnement discontinu possédant un réceptacle (19, 119) qui est disposé à l'extrémité libre du bras de chargement (11, 111, 211) et qui peut pivoter par rapport au bras (11, 111, 211) entre une première position de fonctionnement dans laquelle le réceptacle est pratiquement horizontal afin qu'il soit rempli et une seconde position de fonctionnement dans laquelle le réceptacle est au moins partiellement retourné au-dessus de la trémie (4), **caractérisé en ce que** le réceptacle (19) est amovible et le bras (211) et le châssis (2) sont disposés afin qu'ils puissent être couplés à un appareil de chargement (220) de type à fonctionnement continu, et **en ce que** le châssis comporte un dispositif de coopération rapide destiné à retenir l'appareil de chargement à fonctionnement continu sur le châssis à l'aide d'un accouplement articulé.

2. Chariot de mélange selon la revendication 1, dans lequel l'appareil (220) de chargement continu comprend un dispositif de coopération rapide qui peut coopérer avec le dispositif correspondant de coopération placé sur le châssis (2).

3. Chariot de mélange selon la revendication 2, dans lequel le dispositif de coopération placé sur le châssis comporte un berceau (225) qui peut être fermé sélectivement pour retenir une broche (223) du dispositif de coopération dans le berceau (225), et un dispositif de positionnement (226) est disposé afin qu'il positionne la broche (223) lorsqu'il est logé dans le berceau (225).

4. Chariot de mélange selon l'une quelconque des revendications 1 à 3, dans lequel le réceptacle (19) peut être remplacé par des réceptacles de différents types, et des dispositifs de coopération rapide sont disposés sur le bras afin qu'ils coopèrent avec les réceptacles.

5. Chariot de mélange selon la revendication 4, dans lequel le dispositif de coopération rapide est réglable de manière qu'il puisse coopérer avec des réceptacles de différents types.

6. Chariot de mélange selon l'une quelconque des revendications précédentes, dans lequel le réceptacle (19, 119) est une pelle de chargement.

7. Chariot de mélange selon l'une quelconque des revendications précédentes, dans lequel un organe (120) de coupe d'ensilage est incorporé en association avec le réceptacle (119).

8. Chariot de mélange selon la revendication 6, dans lequel la pelle de chargement (19) est du type à guillotine ou du type à fourche ou du type à godet.

9. Chariot de mélange selon une ou plusieurs des revendications précédentes, dans lequel le réceptacle (19) peut être remis en place de façon amovible par un appareil de poussée.

10. Chariot de mélange selon la revendication 9, dans lequel l'appareil de poussée est d'un type ayant une lame ou des balais fixes ou rotatifs.

11. Chariot de mélange selon l'une ou plusieurs des revendications précédentes, de type autopropulsé, ayant un moteur (6) monté transversalement sur le châssis (2) du côté de la trémie (4) opposé à celui du dispositif de chargement de la composition d'alimentation.
